# EUROPÄISCHE PATENTANMELDUNG

(11) **EP 1 160 612 A1**
(43) Veröffentlichungstag der Anmeldung: **05.12.2001**
(21) Anmeldenummer: 00810466.3
(22) Anmeldetag: 29.05.2000
(51) Int. Cl.: G02B 21/34, B01L 3/00

(54) **Transportvorrichtung für Objektträger**

(71) Anmelder: Sulzer Medica AG, 8401 Winterthur (CH)
(72) Erfinder: Frei, Heribert, 8404 Winterthur (CH); Hildebrand, Steven, 9000 St. Gallen (CH); Brunner, Andreas, 8425 Oberembrach (CH); Tommasini, Roberto, 8610 Uster (CH); Müller, Werner, Dr., 8542 Wiesendangen (CH)
(74) Vertreter: Sulzer Management AG

(57) **Zusammenfassung**

Die Erfindung zeigt eine Transportvorrichtung für Objektträger (1), an denen Präparate (2) in einer Trägerflüssigkeit (3) auf einer vorgegebenen, ebenen Fläche (5) anlagerbar sind. Ein Gegenkörper (6) steht innerhalb einer Dichtung (4) bis knapp an die ebene Fläche (5) vor, um ein nur kleines Volumen (7) einzuschliessen. Der Gegenkörper besitzt mindestens eine Aussparung (8) innerhalb dieses kleinen Volumens (7) und ein der Aussparung vorgelagertes Dichtelement (9) zur Atmosphäre, welches ohne seine Dichtwirkung zu verlieren mit einer Kanüle (10) wiederholt durchstechbar ist.

## Beschreibung

Die Erfindung handelt von einer Transportvorrichtung für Objektträger, an denen Präparate in einer Trägerflüssigkeit auf einer vorgegebenen, ebenen Fläche anlagerbar sind, mit einer Dichtung, welche die ebene Fläche einschliesst und mit einem Gegenkörper, welcher die Dichtung gegen den Objektträger presst, um ein Volumen einzuschliessen.

Objektträger werden im technischen, medizinischen und biologischen Bereich verwendet, um Präparate zu untersuchen. Sehr häufig werden-rechteckige Glasobjektträger, wie sie in der Mikroskopie verwendet werden, benutzt, um die Probe in einem kleinen Volumen auf einer grossen ebenen Fläche zu verteilen. Oft wird die Probe mit einer Trägerflüssigkeit aufgebracht, wie es z.B. bei Färbetechniken oder Hybridisierungstechniken üblich ist. Diese Flüssigkeiten müssen sehr oft abgekapselt sein, um den Kontakt mit der Atmosphäre zu verhindern, sei es um unerwünschte Reaktionen zu vermeiden, sei es um generell Verluste an die Umgebung zu verhindern, wie es für radioaktive oder toxische Flüssigkeiten zwingend ist. Ein weiterer Aspekt für gekapselte Objektträger ist, dass sie auf bestimmten Temperaturen gehalten werden müssen, um-in den Präparaten bestimmte Reaktionen zu erreichen oder zu verhindern. Flüssigkeitsbäder in denen gekapselte Objektträger gelagert werden können, stellen eine effiziente Temperaturführung sicher, wobei jedoch an den Objektträger hohe Anforderungen bezüglich der Dichtheit seiner Kapselung bestehen.

Auf dem Markt ist im Augenblick ein System erhältlich (CLONTECH Laboratories, Inc., 1020 East Meadow Circle, Palo Alto, CA 94303-4230, USA) bei dem ein Objektträger und ein Gegenstück die mit dem Präparat einen schmalen Rechteckquerschnitt bilden in ein Kunststoffrohrstück eingeschoben werden, welches ein Sackloch mit diesem Rechteckquerschnitt besitzt und an seinem Eintritt einen Gewindedeckel und ein Rohrstück mit grösserem Innendurchmesser als dem grössten Rechteckdurchmesser aufweist.

Ein weiteres Produkt (Grace Biolabs Inc., P.O. Box 228, Bend, OR 97709, USA) besteht aus einem Gegenplättchen zu einem beliebigen Glasobjektträger mit einer dazwischenliegenden Dichtung. Nach Aufbringen des Präparates auf den Objektträger wird das Paket bestehend aus Objektträger, Präparat, Dichtung und Gegenplättchen zusammengepresst und in einen mit Blattfedern besetzten Rahmen geschoben. Die Blattfedern sollen das Paket für das weitere Handling zusammenhalten.

Beide Lösungen haben den Nachteil, dass Objektträger und Präparat beim Aufbringen der Atmosphäre ausgesetzt sind und dass ein Teil des Präparates verloren gehen könnte. Ausserdem sind heikle Manipulationsschritte notwendig, wenn das Gegenplättchen bei aufgebrachtem Präparat aufgesetzt werden muss und wenn das von Hand zusammengehaltene Paket in ein Rohrstück oder in einen Halterahmen eingeschoben und verschlossen wird. Bei wertvollen, toxischen oder radioaktiven Präparaten besteht hier ein nicht zu unterschätzendes Risiko. Ein weiterer Nachteil besteht darin, dass das eingeschlossene Volumen relativ zur Anlagefläche am Objektträger gross ist, sodass auch relativ grosse Mengen an Präparat notwendig werden, um einen Objektträger für Untersuchungen vorzubereiten.

Aufgabe der Erfindung ist es, eine bessere Transporteinrichtung für Objektträger aufzuzeigen. Diese Aufgabe wird dadurch gelöst, dass gemäss dem unabhängigen Anspruch 1 der Gegenkörper innerhalb der Dichtung bis knapp an die ebene Fläche vorsteht, um nur ein kleines Volumen einzuschliessen, dass der Gegenkörper mindestens eine Aussparung innerhalb des Volumens und ein der Aussparung vorgelagertes Dichtelement zur Atmosphäre besitzt, welches ohne seine Dichtwirkung zu verlieren mit einer Kanüle wiederholt durchstechbar ist.

Diese Anordnung hat den Vorteil, dass schwierige Präparate praktisch ohne Kontakt zur Atmosphäre einbringbar sind, dass über eine Kanüle im voraus ein Vakuum in dem eingeschlossenen Volumen erzeugt werden kann, dass keine Zusammensetzspiele mit Präparaten an der Transportvorrichtung notwendig sind, dass Transportvorrichtungen mit Objektträgern zusammengesetzt an Lager gelegt werden können, dass eine grosse Transportsicherheit erreicht wird, dass schwierige Fluide auch wieder über Kanülen entladen werden können, dass die Transporteinrichtung auch als Reaktionsbehälter verwendbar ist, in den verschiedene Fluide zu verschiedenen Zeiten einbringbar sind, und dass ein minimaler verlustfreier Verbrauch an Präparaten damit verbunden ist.

Die abhängigen Ansprüche 2 bis 13 sind vorteilhafte Weiterbildungen der Erfindung. So kann die Dichtung mindestens lokal so breit und in Druckrichtung so elastisch ausgeführt werden, dass sie selbst das Dichtelement bildet, welches das wiederholte Durchstossen mit einer Kanüle gestattet. Konstruktiv geschieht dies dadurch, dass die Dichtung in Druckrichtung wesentlich höher als ein Spalt S zwischen der ebenen Fläche des Objektträgers und dem Gegenkörper ist. Die Dichtung stellt in Druckrichtung eine lange, weiche und vorgespannte Feder dar, die im vorgespannten Zustand weder durch Fertigungstoleranzen für die Einbauhöhe noch durch die Anwesenheit einer sie durchdringenden Kanüle in ihrer Funktion als Dichtung beeinträchtigt wird.

Wenn der Rahmen und die Dichtung rechteckig ausgeführt sind, entstehen Fenster wie sie beim Mikroskopieren üblich sind. Dabei kann der Gegenkörper in transparentem Kunststoff ausgeführt sein und eine Einbuchtung auf der Höhe des Fensters haben, um dort eine geringere Wandstärke für besseren Strahlungsdurchgang zu erzeugen.

Dadurch, dass der Gegenkörper bis auf wenige Zehntelmillimeter an den Objektträger reicht und einen Spalt S bildet, besteht ein nur geringes eingeschlossenes Volumen von Bruchteilen eines Milliliters für handelsübliche Objektträger. Der Gegenkörper ist mit einem Rahmen verbindbar, wobei während der Verbindung die Vorspannung an der Dichtung erzeugt wird. Die Verbindung selbst kann durch eine Klebe- oder Schmelzverbindung geschehen, wobei das Anschmelzen der Kontaktflächen durch Wärmestrahlung oder Ultraschall geschehen kann. Eine Verbindung von Gegenstück und Rahmen kann auch durch eine umlaufende Schnappverbindung realisiert werden.

Eine lösbare Verbindung entsteht, wenn man Rahmen und Gegenstück in umlaufender Richtung mit Schrauben verbindet.

Die Breite B des Dichtelements oder der Dichtung, die als Dichtelement gegenüber einer sie durchdringenden Kanüle verwendet wird, ist mit Vorteil so gewählt, dass das Dichtelement dichtet bevor die Spitze der Kanüle vollständig aus dem Dichtelement zurückgezogen ist und bevor die Öffnung der Kanüle zur Atmosphäre freigegeben ist.

Der Rahmen ist mit einem seitlichen Schlitz versehen, durch den der Objektträger für die Montage seitlich eingeschoben wird. Ein Ende des Objektträgers, auf dem beispielsweise eine Markierung oder Beschriftung anbringbar ist, steht auf der Einschubseite vor. Anschliessend wird die Dichtung mit dem Gegenkörper in den Rahmen eingelegt. Das Gegenstück und der Rahmen werden soweit zusammengepresst, bis die Dichtung ihre vorgesehene Vorspannung erreicht hat, und in dieser Stellung zueinander fixiert. Auf der Einschubseite sind am Rahmen Vorsprünge angebracht, die unter Schwerkraft eine hängende Lagerung der Transportvorrichtung und ein Eintauchen in Flüssigkeitsbäder gestatten.

Das Einbringen eines Präparates mit einer Kanüle kann auf verschiedene Weise erfolgen.

Eine Möglichkeit besteht darin, mit einer Kanüle ein Dichtelement zu durchstossen, um ein Vakuum zu ziehen, die Kanüle wieder zu entfernen und anschliessend mit einer zweiten Kanüle das Präparat einzubringen. Oft ist auf den Objektträgern eine poröse, saugstarke Membran zur Aufnahme der Präparate angebracht, wobei die Kapillarwirkung dieser Strukturen so gross ist, dass sich das Präparat ohne Vakuum von selbst verteilt.

Bei wenig gefährlichen Präparaten genügt es auch parallel zur Lieferkanüle für das Präparat eine zweite Entlüftungskanüle anzubringen. Eine weitere Möglichkeit zum Entlüften besteht, wenn an der Lieferkanüle für das ungefährliche Präparat in dem Bereich, in den das Dichtelement zu liegen kommt, relativ tiefe aber schmale Längsrillen angebracht sind, die ein Eindringen der Masse des Dichtelementes verhindern.

Im folgenden wird die Erfindung anhand von Ausführungsbeispielen beschrieben. Es zeigen:
- Fig. 1: Schematisch und vergrössert einen Längsschnitt durch eine vormontierte Transporteinrichtung mit Objektträger;
- Fig. 2: schematisch einen Längsschnitt durch eine vormontierte Transporteinrichtung analog zu Figur 1, jedoch mit einer Schnappverbindung;
- Fig. 3: schematisch einen Längsschnitt durch eine vormontierte Transporteinrichtung analog zu Figur 1 mit einer geschlossenen Rundschnur als Dichtung und mit separaten Dichtelementen für das Beladen mit Kanülen;
- Fig. 4: schematisch eine Ansicht einer Transportvorrichtung analog zu Figur 1;
- Fig. 5: schematisch einen stark vergrösserten Ausschnitt von einem Dichtelement, durch welches eine Kanüle zurückgezogen wird; und
- Fig. 6: schematisch und noch einmal vergrössert einen Schnitt durch eine Kanüle mit Längsrillen auf der äusseren Mantelfläche.

Die Figuren zeigen eine Transportvorrichtung für Objektträger 1, an denen Präparate 2 in einer Trägerflüssigkeit 3 auf einer vorgegebenen, ebenen Fläche 5 anlagerbar sind. Ein Gegenkörper 6 steht innerhalb einer Dichtung 4 bis knapp an die ebene Fläche 5 vor, um ein nur kleines Volumen 7 einzuschliessen. Der Gegenkörper besitzt mindestens eine Aussparung 8 innerhalb dieses kleinen Volumens 7 und ein der Aussparung vorgelagertes Dichtelement 9 zur Atmosphäre, welches ohne seine Dichtwirkung zu verlieren mit einer Kanüle 10 wiederholt durchstechbar ist.

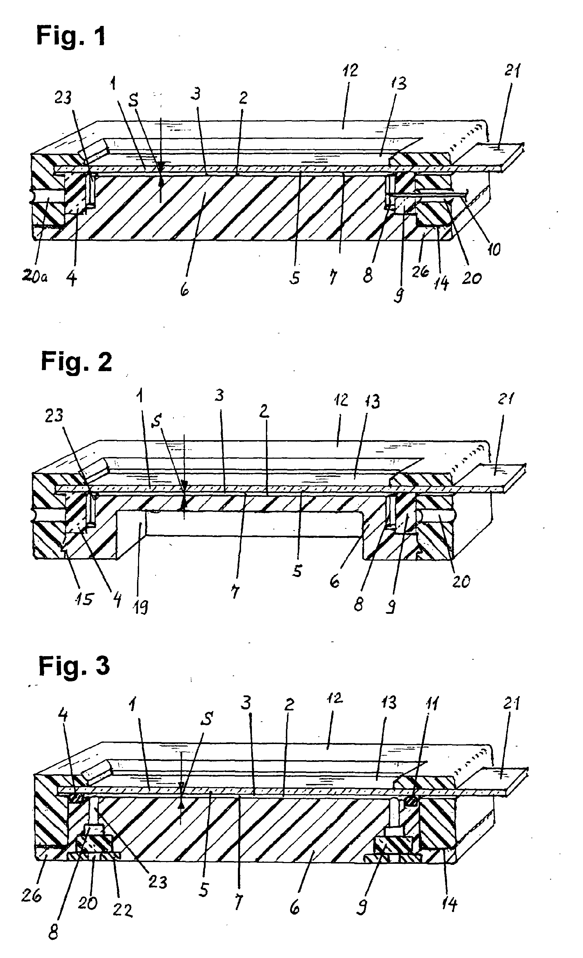

In Figur 1 ist ein Rahmen 12 mit einem seitlichen Schlitz versehen, durch den ein Objektträger 1 von der Seite eingeschoben wurde und anschliessend von einem Gegenkörper 6 durch eine elastische Dichtung 4 so stark mit seiner Rückseite 13 gegen den Rahmen gepresst wurde, dass zwischen Objektträger 1 und Gegenkörper 6 ein Volumen 7 eingeschlossen ist. Der Gegenkörper 6 taucht in die Dichtung 4 ein und bildet mit seiner Stirnseite zum Objektträger 1 einen Spalt S der sich in der Grössenordnung von Hundertstel Millimeter bis Millimeter bewegt, um das eingeschlossene Volumen 7 klein zu halten. Dabei kann ein Spalt S von Hundertstel Millimeter dadurch erzeugt werden, dass der Gegenkörper 6 mit wenigen, um Hundertstel Millimeter in Randbereichen zusätzlich vorstehenden Stützpunkten am Objektträger aufliegt, um im Bereich eines Fensters mit grosser Genauigkeit einen sehr kleinen Spalt S zu erzeugen. Die Höhe der komprimierten Dichtung 4 ist so gross gewählt, dass sie ein Mehrfaches beispielsweise das Zehn- bis Zwanzigfache des Spalts S beträgt, um das wiederholte Durchstechen mit einer Kanüle 10 zuzulassen, ohne ihre Dichtfunktion zu verlieren, und um die Fertigungstoleranzen beim Zusammenfügen von Rahmen 12 und Gegenkörper 6 auszugleichen. Die Dichtung 4 bildet in diesem Fall selbst das Dichtelement 9, welches das wiederholte Durchstechen mit der Kanüle 10 zulässt. Der Rahmen 12 besitzt auf den Seiten jeweils einen Durchbruch 20, um die Kanüle 10 bei ihrem Eintritt grob zu führen. Die schräg angeschliffene Kanüle 10 durchsticht das Dichtelement 9 und gelangt mit ihrer schrägen Ausflussöffnung in eine Aussparung 8 auf der Innenseite des Dichtelements 9. Die Aussparung 8 ist so bemessen, dass eine Spitze 16 der Kanüle 10 erst dann am Gegenkörper 6 ansteht, wenn die Öffnung der Kanüle nach innen freigegeben ist, um ein Präparat 2 mit Trägerflüssigkeit 3 einzuspritzen. Zwischen der Aussparung 8 und dem Volumen im Spalt S besteht eine Verbindung 23 durch die das Präparat 2 und die Trägerflüssigkeit 3 an die ebene Fläche 5 der Innenseite des Objektträgers 1 gelangen. Diese kann mit einer porösen und saugstarken Membran überzogen sein, um im Untersuchungsbereich eine gleichmässige Verteilung zu erreichen. Der Rahmen 12 gibt auf der Rückseite 13 des Objektträgers 1 ein Fenster frei, durch welches berührungsfreie Untersuchungen vorgenommen werden können. Mit einem zweiten Durchbruch 20a kann eine weitere Kanüle gesteckt werden, die beispielsweise eine Entlüftung sicherstellt oder einen Unterdruck erzeugt bevor das Präparat 2 mit einer eventuellen Trägerflüssigkeit 3 eingespritzt wird. Viele Präparate wie beispielsweise Blutproben sind für sich selbst flüssig genug, um eingespritzt zu werden. Die Verbindung von Rahmen 12 und Gegenstück 6 ist als einmalige Klebe- oder Schmelzverbindung 14 an einem Flansch 26 vorgesehen. Statt einer nicht lösbaren Klebe- oder Schmelzverbindung 14 kann der Flansch 26 des Gegenkörpers 6 auch mit lösbaren Schrauben (nicht gezeigt) am Rahmen 12 befestigt sein. Objektträger und Transportvorrichtung werden vormontiert an Lager gelegt, wobei ein Ende 21 des Objektträgers 1 soweit nach aussen vorsteht, dass eine Beschriftung oder Markierung angebracht werden kann. Als Material für Rahmen 12 und Gegenstück 6 sind Kunststoffe beispielsweise Thermoplaste, die sterilisierbar sind, vorgesehen. Die Dichtung 4, die gleichzeitig das Dichtelement 9 für eine Kanüle 10 bildet, kann aus einem gummiähnlichen Kunststoff beispielsweise aus Silikongummi bestehen, der ebenfalls sterilisierbar sein muss.

Die nachfolgenden Ausführungsbeispiele haben für gleiche Funktionen gleiche Bezugsziffern.

Das Ausführungsbeispiel von Figur 2 unterscheidet sich zum vorhergehenden dadurch, dass statt einer Klebe- oder Schmelzverbindung eine Schnappverbindung 15 zwischen Rahmen 12 und Gegenkörper 6 angebracht ist, die beim Zusammenpressen der beiden Bauteile eine Verklinkung bewirkt, die sich von selbst und auch durch die zusammengepresste Dichtung 4 nicht lösen kann. Solche Schnappverbindungen lassen sich am besten an umlaufenden Führungsflächen zwischen Rahmen 12 und Gegenstück 6 anbringen. Sie können auch in Form von überstehenden Klauen am Rahmen 12 angebracht sein, welche beim Einpressen des Gegenkörpers 6 zurückfedern und anschliessend sichern, aber von aussen zugänglich sind, um sie lösen zu können.

Bei dem Ausführungsbeispiel von Figur 3 sind Dichtung 4 und Dichtelement 9 getrennt. Die Dichtung 4 besteht aus einer zusammenhängenden Rundschnur 11 die ein Rechteck bildet, in welches der Gegenkörper 6 eintaucht, um den Spalt S zu bilden. Der Rahmen 12 und der Gegenkörper sind am Flansch 26 mit einer Klebe- oder Schmelzverbindung zueinander fixiert. Ihre Montage mit dem Objektträger 21 erfolgt gleich wie im Beispiel der Figur 1. Zwei separate Dichtelemente 9 sind als Rondellen in Aussparungen des Gegenkörpers 6 eingepresst. Sie bestehen aus einem gummiähnlichen Kunststoff, der sterilisierbar ist, und werden zusätzlich durch Deckel 22 gehalten. Das Dichtelement ist in seiner Funktion, wie zu Figur 1 beschrieben, so breit und gross gewählt, dass es mehrfach von einer Kanüle durchstochen werden kann, ohne seine Dichtfunktion zu verlieren. Die Deckel 22 weisen einen Durchbruch 20 auf, um den Ansatzpunkt für eine Kanüle festzulegen. Die Spitze der Kanüle lässt sich soweit in eine Aussparung 8 hinter dem Dichtelement 9 vorschieben, dass auch die Öffnung der Kanüle den Innenraum erreicht und dass ein flüssiges oder gasförmiges Präparat 2, 3 über eine Verbindung 23 in einen eigentlichen Beobachtungs- und Reaktionsraum mit der Spaltweite S gelangt.

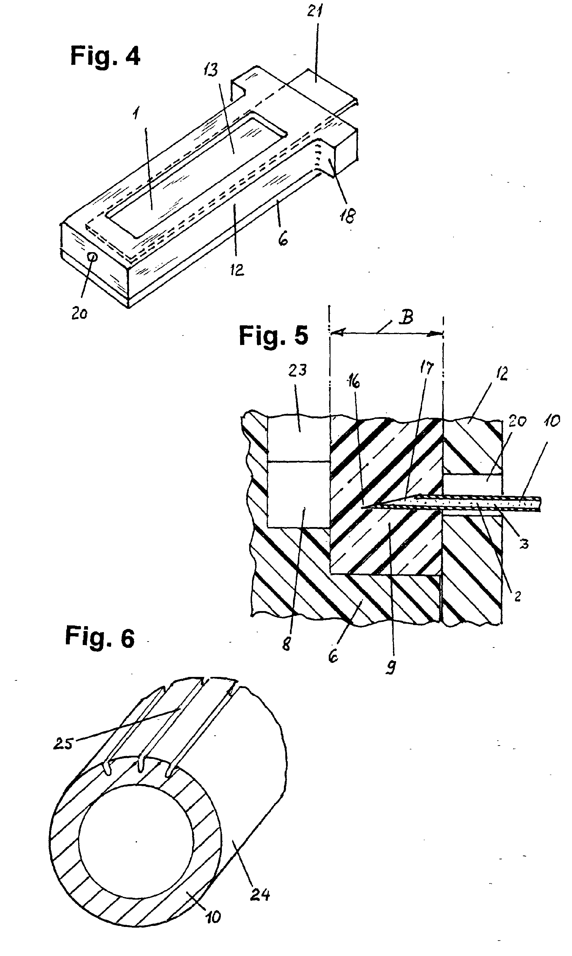

In Figur 4 ist gezeigt, dass man an der Seite des Rahmens 12, an der der Objektträger 1 eingeschoben wird, Vorsprünge 18 oder andere Hilfsmittel anbringen kann, um die Transportvorrichtung unter Schwerkraft vertikal hängend zu transportieren oder in Bäder eintauchen zu können. Ein Ende 21 des Objektträgers 1 steht auf der Seite der Vorsprünge 18 heraus, um die Beschriftung auch im eingetauchten Zustand des Präparates ablesen zu können.

In Figur 5 ist eine Kanüle 10 während dem Zurückziehen durch ein Dichtelement 9 dargestellt. Die Spitze 16 der Kanüle 10 hat die Aussparung 8 bereits verlassen und das Dichtelement 9 hat eine vorher durch die Kanüle gestossene Öffnung bereits hinter der Spitze 16 geschlossen. Die schräg - stehende Ausflussöffnung 17 der Kanüle ist durch das Dichtelement 9 vollständig geschlossen und hat die Atmosphäre im Durchbruch 20 noch nicht erreicht. Das Volumen auf der Innenseite ist bereits eingeschlossen. Beim weiteren Zurückziehen der Kanüle 10 wird die Öffnung 17 zur Atmosphäre frei gesetzt, ohne dass deswegen, wie bei einer normalen Injektion, Präparat an die Umgebung abgegeben wird. Die Breite B des Dichtelements ist so gross gewählt, dass mit Sicherheit der Innenraum an der Aussparung 8 verschlossen ist, bevor die Öffnung 17 der Kanüle 10 die Atmosphäre erreicht. Bei einem solch breiten Dichtelement 9 werden auch einzelne feste Partikel des Präparates 2 für sich in der Masse des Dichtelements 9 eingeschlossen.

Hingegen kann es bei ungefährlichen Präparaten von Vorteil sein, wenn, wie in Figur 6 gezeigt, bei vollständig durch das Dichtelement 9 durchgesteckter Kanüle 10 der Mantel 24, der von dem Dichtelement 9 umschlossen ist, in Längsrichtung Rillen 25 aufweist, die eine Entlüftung des eingeschlossenen Volumens 7 beim Einspritzen des Präparates 2 ermöglichen. Falls die Schwerkraft bei einer solchen Anordnung zur Verteilung innerhalb des Volumens 7 ausreicht, genügt es, die Transporteinrichtung so zu drehen, dass ein Dichtelement 9 den höchsten Punkt des Volumens 7 bildet, und an diesem Dichtelement mit einer Kanüle 10, die das Dichtelement mit Längsrillen in der Mantelfläche überbrückt, einzuspritzen.

Bei zwei auf gegenüberliegenden Seiten angebrachten Dichtelementen 9 besteht immer die Möglichkeit, die Transporteinrichtung zum Beladen so zu halten, dass die Dichtelemente 9 vertikale übereinander angeordnet sind und dass am oberen Dichtelement 9 eine Kanüle zur Entlüftung angebracht wird, während am unteren Dichtelement 9 mit einer Kanüle 10 eingespritzt wird.

## Patentansprüche

1. Transportvorrichtung für Objektträger (1), an denen Präparate (2) in einer Trägerflüssigkeit (3) auf einer vorgegebenen, ebenen Fläche (5) anlagerbar sind, mit einer Dichtung (4), welche die ebene Fläche (5) einschliesst und mit einem Gegenkörper (6), welcher die Dichtung (4) gegen den Objektträger (1) presst, um ein Volumen (7) einzuschliessen, **dadurch gekennzeichnet, dass** der Gegenkörper (6) innerhalb der Dichtung (4) bis knapp an die ebene Fläche (5) vorsteht, um nur ein kleines Volumen einzuschliessen, dass der Gegenkörper (6) mindestens eine Aussparung (8) innerhalb des Volumens (7) und ein der Aussparung (8) vorgelagertes Dichtelement (9) zur Atmosphäre besitzt, welches ohne seine Dichtwirkung zu verlieren mit einer Kanüle (10) wiederholt durchstechbar ist.

2. Transportvorrichtung nach Anspruch 1, **dadurch gekennzeichnet, dass** das Dichtelement (9) für eine Kanüle durch eine elastische Dichtung (4) selbst gebildet ist.

3. Transportvorrichtung nach Anspruch 1, **dadurch gekennzeichnet, dass** die Dichtung (4) aus Rundmaterial (11) in Rechteckform besteht.

4. Transportvorrichtung nach Anspruch 1, **dadurch gekennzeichnet, dass** der Gegenkörper (6) innerhalb der Dichtung (4) einen Spalt S zur ebenen Fläche (5) bildet der zwischen 0,01 und 1 mm liegt.

5. Transportvorrichtung nach Anspruch 1, **dadurch gekennzeichnet, dass** der Gegenkörper (6) mit einem Rahmen (12) verbindbar ist, der den Objektträger (1) von seiner Rückseite (13) abstützt.

6. Transportvorrichtung nach Anspruch 5, **dadurch gekennzeichnet, dass** der Rahmen (12) mit dem Gegenkörper (6) durch eine Klebe- oder Schmelzverbindung (14) verbunden ist.

7. Transportvorrichtung nach Anspruch 5, **dadurch gekennzeichnet, dass** der Rahmen (12) mit dem Gegenkörper (6) durch eine Schnappverbindung (15) verbindbar ist.

8. Transportvorrichtung nach Anspruch 1 oder 2, **dadurch gekennzeichnet, dass** das Dichtelement (9) eine derartige Breite B aufweist, dass das Dichtelement (9) dichtet bevor die Spitze (16) einer Kanüle (10) vollständig aus dem Dichtelement (9) zurückgezogen ist und bevor die Öffnung (17) der Kanüle (10) zur Atmosphäre freigegeben ist.

9. Transportvorrichtung nach einem der Ansprüche 1 bis 8, **dadurch gekennzeichnet, dass** der Objektträger (1) aus durchsichtigem Glas besteht.

10. Transportvorrichtung nach einem der Ansprüche 1 bis 9, **dadurch gekennzeichnet, dass** der Gegenkörper (6) aus einem lichtdurchlässigen Kunststoff besteht.

11. Transportvorrichtung nach einem der Ansprüche 1 bis 10, **dadurch gekennzeichnet, dass** sie auf einer Seite gegenüberliegende Vorsprünge (18) aufweist, um sie unter Schwerkraft hängend zu transportieren oder in ein Flüssigkeitsbad tauchen zu können.

12. Transportvorrichtung nach einem der Ansprüche 1 bis 11 mit einer Kanüle zum Einbringen des Präparates mit einer Trägerflüssigkeit, **dadurch gekennzeichnet, dass** die Kanüle (10) auf ihrem äusseren Mantel (24) im Bereich ihrer Ausflussöffnung (17) mindestens eine Längsrille (25) zur Entlüftung aufweist.

13. Transportvorrichtung nach einem der Ansprüche 1 bis 5, **dadurch gekennzeichnet, dass** der Rahmen (12) und der Gegenkörper (6) lösbar, zum Beispiel durch mehrere Schraubverbindungen, miteinander verbunden sind.
